# EUROPEAN PATENT APPLICATION

(11) **EP 2 277 952 A1**
(43) Date of publication of application: **26.01.2011**
(21) Application number: 09735740.4
(22) Date of filing: 20.04.2009
(51) Int. Cl.: C08L 101/00, B32B 7/02, B32B 27/20, C08K 3/22, C08K 5/00, G02B 1/11, G02F 1/1335, H01B 5/14

(54) **COMPOSITION FOR TRANSPARENT FILM FORMATION AND LAYERED TRANSPARENT FILM**

(30) Priority: 21.04.2008 JP 2008110632; 30.09.2008 JP 2008253333
(71) Applicant: Dai Nippon Toryo Co., Ltd., Osaka-shi Osaka 554-0012 (JP)
(72) Inventor: MUROUCHI, Masato, Otawara-shi Tochigi 324-8516 (JP); HAYASHI, Kenji, Otawara-shi Tochigi 324-8516 (JP); SUZUKI, Kaoru, Otawara-shi Tochigi 324-8516 (JP); MURAKAMI, Masaaki, Otawara-shi Tochigi 324-8516 (JP)
(74) Representative: Dossmann, Gérard
(86) International application number: PCT/JP2009/057879
(87) International publication number: WO 2009/131104

(57) **Abstract**

The invention provides a transparent-film-forming composition containing at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), and a binder having a refractive index lower than that of the ingredient B, and preferably, a dispersion stabilizer, and being capable of forming, on a surface of a transparent substrate, a transparent film having excellent transparency and free from interference-related disturbance. The invention also provides a transparent-film-layered product having a transparent substrate and, on a surface of the substrate, a transparent film formed from the composition, which layered product exhibits a difference in refractive index between the transparent substrate and the transparent film of 0.03 or smaller and excellent transparency, and providing minimized interference-related disturbance.

## Description

### Technical Field

The present invention relates to a composition for forming transparent film (hereinafter may be referred to as "transparent-film-forming composition") and to a transparent-film-layered product. More particularly, the invention relates to a composition which can form, on a surface of a transparent substrate, a transparent film having excellent transparency and providing minimized interference-related disturbance and a difference in refractive index between the film and the transparent substrate of 0.03 or smaller, and to a transparent-film-layered product comprising a transparent substrate and, on a surface of the substrate, a transparent film formed from the composition, which layered product exhibits a difference in refractive index between the transparent substrate and the transparent film of 0.03 or smaller and excellent transparency, and providing minimized interference-related disturbance.

### Background Art

Optical devices and image displays such as a plasma panel display, a liquid crystal display, and a cathode-ray tube display are required to exhibit less reflection light from an external light source (e.g., a fluorescent lamp) for providing a highly clear image through the display surface. One generally employed means for reducing such light reflection is forming a high-refractive-index layer on the display surface of an image display device or an optical device and further forming a low-refractive-index layer thereon.

In recent years, functions of flat-panel displays such as a plasma panel display and a liquid crystal display have been enhanced, and the thus-formed anti-reflection film must have higher transparency and low reflectivity. In order to enhance anti-reflection effect, the anti-reflection layer formed of the high-refractive-index layer and low-refractive-index layer must be provided such that the difference in refractive index between the high- and low-refractive index layers is great. However, when the refractive index of the high-refractive index layer is adjusted to be higher than that of the transparent substrate, interference fringes are generated due to the difference in refractive index between the high-refractive-index layer and the transparent substrate, thereby problematically impairing the quality of the imaging surface, Therefore, the high-refractive-index layer of the anti-reflection film is required to have high transparency and excellent refractive index characteristics as well as to exhibit no difference in refractive index between the high-refractive-index layer and the transparent substrate.

Hitherto, the high-refractive-index layer of the anti-reflection film has been produced through the vapor deposition method (see, for example, Patent Document 1) or the wet coating method. The vapor deposition method is not suitable in practice, since an expensive production apparatus is required.

One generally known procedure of the wet coating method employs a composition for forming a transparent high-refractive-index film, the composition containing inorganic microparticles having a refractive index of 2.0 or higher dispersed in a binder (see, for example, Patent Document 2).

There has also been reported a composition for forming a transparent conductive high-refractive-index film, the composition containing inorganic microparticles having a refractive index 2.0 or higher and conductive microparticles both dispersed in a binder (see, for example, Patent Document 3). The conductive microparticles preferably have a refractive index of 1.8 or higher, and examples of the substance of such microparticles employed include antimony-doped tin oxide (ATO), tin-doped indium oxide (ITO), aluminum-doped zinc oxide (AZO), tin oxide, and zinc oxide.

When the high-refractive-index layer is formed from the aforementioned composition for forming a transparent high-refractive-index film or the composition for forming a transparent conductive high-refractive-index film, inorganic microparticles and the binder are dispersed in the layer. In the case where the difference in refractive index between the inorganic particles and the binder is great, variation in refractive index occurs in the film, resulting in considerable interference-related disturbance. The interference-related disturbance is more significant when a low-refractive-index layer is laminated thereon. In this case, visibility of the laminated product decreases.

In one method for preventing generation of interference fringes, a middle-refractive-index layer is formed between the high-refractive-index layer and the transparent substrate (see, for example, Patent Document 4). However, when this method is employed, a plurality of coating steps are required, thereby problematically increasing production cost,

### Prior Art Documents

### Patent Documents

Patent Document 1: Japanese Patent Application Laid-Open (*kokai*) No. Sho 59-133501
Patent Document 2: Japanese Patent Application Laid-Open (*kokai*) No. 2005-161111
Patent Document 3: Japanese Patent Application Laid-Open (*kokai*) No. 2002-167576
Patent Document 4: Japanese Patent Application Laid-Open (*kokai*) No. 2003-075603

### Summary of the present invention

### Problems to be Solved by the Invention

The present invention has been conceived in view of the aforementioned problems, and an object of the present invention is to provide (1) a composition which can form, on a surface of a transparent substrate, a transparent film having excellent transparency and providing minimized interference-related disturbance and a difference in refractive index between the film and the transparent substrate of 0.03 or smaller. Another object is to provide (2) a transparent-film-layered product comprising a transparent substrate and, on a surface of the substrate, a transparent film formed from the composition, which layered product exhibits a difference in refractive index between the transparent substrate and the transparent film of 0.03 or smaller and excellent transparency, and providing minimized interference-related disturbance.

### Means for Solving the Problems

The present inventors have conducted extensive studies in order to attain the aforementioned objects, and have found that the target effect can be attained by use of a composition comprising at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), and a binder having a refractive index lower than that of the ingredient B. The present invention has been accomplished on the basis of this finding.

Accordingly, the present invention provides a transparent-film-forming composition comprising at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), and a binder having a refractive index lower than that of the ingredient B.

The present invention also provides a transparent-film-forming composition comprising at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B) a binder having a refractive index lower than that of the ingredient B, and a dispersion stabilizer.

The present invention also provides a transparent-film-layered product comprising a transparent substrate and, on a surface of the substrate, a transparent film formed from the transparent-film-forming composition, which layered product exhibits a difference in refractive index between the transparent substrate and the transparent film of 0.03 or smaller.

### Effects of the Invention

Through forming a film by use of the transparent-film-forming composition of the present invention, a transparent-film-layered product having high transparency and free from interference-related disturbance can be obtained in one coating step. As compared with a conventional method, the layered product can be produced at low cost by virtue of the smaller number of coating steps.

### Modes for Carrying Out the Invention

Hereinafter, specific embodiments of the present invention will next be described.
The transparent-film-forming composition of the present invention comprises at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), and a binder having a refractive index lower than that of the ingredient B Preferably, the composition additionally contains a dispersion stabilizer and, if desired, a dispersion medium.

No particular limitation is imposed on the shape of inorganic microparticles serving as ingredients A and B employed in the present invention, and spherical particles are preferred. The microparticles serving as ingredients A and B which may be employed in the invention generally have a primary particle size of 1 to 100 nm, preferably 5 to 40 nm. In a preferred mode, microparticles of ingredient A and those of ingredient B have the same particle size. The primary particle size may be calculated through the BET method.

In the present invention, the ingredient A is incorporated into the composition in order to elevate the refractive index of the formed transparent film. Thus, a microparticle-form inorganic substance having a refractive index of 1.80 or higher and lower than 3.00 is employed as the ingredient A. Note that the refractive index of each material is an intrinsic value, and such refractive index values are disclosed in many references. The ingredient A may be a single component or in combination or two or more species. When a microparticle-form inorganic substance having a refractive index 3.00 or higher is employed as ingredient A, the transparency of the formed film tends to decrease, whereas when a microparticle-form inorganic substance having a refractive index less than 1.80 is employed as ingredient A, the transparency of the formed film cannot be increased to a level of interest. Both cases are not preferred. No particular limitation is imposed on the species of the ingredient A, so long as the objects of the invention can be attained, and known microparticle-form inorganic substance products including commercial products may be used. Examples of employable inorganic substances include zirconium oxide (refractive index: 2.2), titanium oxide (refractive index: 2.76), and cerium oxide (refractive index: 2.2). In addition, conductive microparticles may be uses in order to impart the composition or film formed therefrom with antistatic property. Examples of employable substances of conductive microparticles include antimony-doped tin oxide (ATO) (refractive index: 2.0), tin-doped indium oxide (ITO) (refractive index: 2.0), aluminum-doped zinc oxide (AZO) (refractive index: 2.0), tin oxide (refractive index: 2.0), and zinc oxide (refractive index: 2.0). In the present invention, tin oxide doped with a dopant element such as phosphorus, and zinc oxide doped with gallium or aluminum may be used.

The ingredient B is incorporated into the composition in order to mitigate variation in refractive index of the formed transparent film at the surface and in the inner portion. Thus, a microparticle-form inorganic substance having a refractive index of 1.55 or higher and lower than 1.80 is employed as the ingredient B. No particular limitation is imposed on the species of the ingredient B, so long as the objects of the invention can be attained, and known microparticle-form inorganic substance products including commercial products may be used. Examples of employable species include aluminum oxide (refractive index: 1.76), magnesium oxide (refractive index: 1.64 to 1.74), aluminum hydroxide (refractive index: 1.58), calcium carbonate (refractive index: 1.57 to 1.60), and barium sulfate (refractive index: 1.65). The ingredient B may be a single component or in combination or two or more species.
In addition, conductive microparticles may be used in order to impart the composition or film formed therefrom with antistatic property.

The binder has a refractive index lower than that of the ingredient B, and the refractive index is preferably lower than 1.55. No particular limitation is imposed on the binder, so long as the binder can be dissolved in the dispersion medium employed and can disperse the microparticle-form inorganic substance and form a film of interest. Any binder generally employed in coatings may be used without any limitation.

According to the present invention, the difference in refractive index between the ingredients A and B is preferably 0.05 or greater, more preferably 0.15 or greater The difference in refractive index between the ingredient B and the binder is preferably 0.03 or greater, more preferably 0.06 or greater.

Examples of the binder employed in the invention include alkyd resin, polyester resin, unsaturated polyester resin, polyurethane resin, acrylic resin, epoxy resin, phenolic resin, vinyl resin, silicone resin, fluoro-resin, phthalic resin, amino resin, polyamide resin, polyacryl-silicone resin, melamine resin, urea resin, and modified species thereof. These binder resins may be used singly or in combination of two or more species.

If required, the binder may further contain a cross-linking agent. Any cross-linking agent having, in a molecule thereof, two or more reactive functional groups such as a basic functional group (e.g., amino group), a neutral functional group (e.g., OH group), an acidic functional group (e.g., carboxyl group), or an isocyanate group may be employed.

The binder may be an actinic energy ray-hardenable compound, and examples include radical-polymerizable monomers and radical-polymerizable oligomers. Specific examples of radical-polymerizable monomers include monofunctional (meth)acrylates such as methyl (meth)acrylate, ethyl (meth)acrylate, isopropyl (meth)acrylate, 2-ethylhexyl (meth)acrylate, butyl (meth)acrylate, cyclohexyl (meth)acrylate, tetrahydrofurfuryl (meth)acrylate, 2-hydroxyethyl (meth)acrylate, 2-hydroxypropyl (meth)acrylate, polyethylene glycol mono(meth)acrylate, methoxypolyethylene glycol mono(meth)acrylate, polypropylene glycol mono(meth)acrylate, polyethylene glycol polypropylene glycol mono(meth)acrylate, polyethylene glycol polytetramethylene glycol mono(meth)acrylate, and glycidyl (meth)acrylate; bifunctional (meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, neopentyl glycol di(meth)acrylate, allyl di(meth)acrylate, bisphenol A di(meth)acrylate, ethylene oxide-modified bisphenol A di(meth)acrylate, polyethylene oxide-modified bisphenol A di(meth)acrylate, ethylene oxide-modified bisphenol S di(meth)acrylate, bisphenol S di(meth)acrylate, 1,4-butanediol di(meth)acrylate, and 1,3-butylene glycol di (meth) acrylate; ≥3-functional (meth) acrylates such as trimethylolpropane tri(meth)acrylate, glycerol tri(meth)acrylate, pentaerythritol tri(meth)acrylate pentaerythritol tetra(meth)acrylate, ethylene-modified trimethylolpropane tri(meth)acrylate, dipentaerythritol penta(meth)acrylate, and dipentaerythritol hexa(meth)acrylate; and radical-polymerizable monomers such as styrene, vinyltoluene, vinyl acetate, N-vinylpyrrolidone, acrylonitrile, and allyl alcohol.

Specific examples of radical-polymerizable oligomers include prepolymers having at least one (meth)acryloyl group such as polyester (meth)acrylate, polyurethane (meth)acrylate, epoxy (meth)acrylate, polyether (meth)acrylate, oligo (meth)acrylate, alkyd (meth)acrylate, polyol (meth)acrylate, and silicone (meth)acrylate. Of these, polyester (meth)acrylates, epoxy (meth)acrylates, and polyurethane (meth)acrylates are particularly preferred as radical-polymerizable oligomers. In the present invention, these actinic energy ray-hardenable compounds may be used singly or in combination of two or more species.

When the actinic energy ray-hardenable compound is employed as the aforementioned binder, through addition of a small amount of photopolymerization initiator (photosensitizer), the transparent-film-forming composition can be hardened by a small dose of actinic energy ray radiation.

Examples of the photopolymerization initiator (photosensitizer) employed in the present invention include 1-hydroxycyclohexyl phenyl ketone, benzophenone, benzyl dimethyl ketone, benzoin methyl ether, benzoin ethyl ether, p-chlorobenzophenone, 4-benzoyl-4-methyldiphenyl sulfide, 2-benzyl-2-dimethylamino-1-(4-morpholinophenyl)-butanone-1, and 2-methyl-1-[4-(methylthio)phenyl]-2-morpholinopropanone-1 These photopolymerization initiators may be used singly or in combination of two or more species.

The transparent-film-forming composition of the present invention preferably contains a dispersion stabilizer for the purpose of further enhance dispersion stability and storage stability of the microparticle-form inorganic substance Examples of the dispersion stabilizer which may be used in the present invention include a chelating agent and a metal complex. Through addition of a chelating agent or a metal complex, the dispersion stability of the microparticle-form inorganic substance can be enhanced without impairing the hardness and scratch resistance of the formed film.

The chelating agent which may be employed in the present invention is preferably soluble in the dispersion medium. Examples of the chelating agent include polyamines such as ethylenediamine, diethylenetriamine, and triethylenetetramine; β-diketones such as pivaloylfluoroacetone, acetylacetone, trifluoroacetylacetone, and hexafluoroacetylacetone; polyaminocarboxylic acids such as ethylenediaminetetraacetic acid; oxycarboxylic acids such as citric acid; oximes such as dimethylglyoxime; oxine; and oxalic acid. These chelating agents may be used singly or in combination of two or more species.

The metal complex which may be employed in the present invention is preferably soluble in the dispersion medium. Examples of the metal complex include those formed from a metal and a ligand, the metal being selected from the group consisting of zirconium, titanium, aluminum, zinc, indium, and tin, and the ligand being selected from the group consisting of polyamines such as ethylenediamine, diethylenetriamine, and triethylenetetramine; β-diketones such as pivaloylfluoroacetone, acetylacetone, trifluoroacetylacetone, and hexafluoroacetylacetone; polyaminocarboxylic acids such as ethylenediaminetetraacetic acid; oxycarboxylic acids such as citric acid; oximes such as dimethylglyoxime; oxine; and oxalic acid. These metal complexes may be used singly or in combination of two or more species. Also, at least one chelating agent and at least one metal complex may be used in combination.

For the purpose of further enhancing the storage stability of the transparent-film-forming composition of the present invention, other additional dispersants may be added thereto. No particular limitation is imposed on such dispersants, and examples of preferred dispersants include phosphate ester-type dispersants having a polyoxyethylene alkyl structure,

The transparent-film-forming composition of the present invention may further contain a dispersion medium in a desired amount. Examples of the dispersion medium include water; alcohols such as methanol, ethanol, isopropanol, n-butanol, 2-butanol, and octanol; ketones such as acetone, methyl ethyl ketone, methyl isobutyl ketone, cyclohexanone, and 4-hydroxy-4-methyl-2-pentanone; esters such as ethyl acetate, butyl acetate, ethyl lactate, γ-butyrolactone, propylene glycol monomethyl ether acetate, and propylene glycol monoethyl ether acetate; ethers such as ethylene glycol monomethyl ether and diethylene glycol monobutyl ether; aromatic hydrocarbons such as benzene, toluene, xylene, and ethylbenzene; and amides such as dimethylformamide, N,N-dimethylacetamide, and N-methylpyrrolidone. Among these dispersion media, those having excellent inorganic particle dispersibility and film-formability upon application are preferably employed. Examples of such preferred dispersion media include ethanol, isopropanol, n-butanol, 2-butanol, methyl ethyl ketone, methyl isobutyl ketone, cyclohexanone, 4-hydroxy-4-methyl-2-pentanone, ethyl acetate, butyl acetate, toluene, xylene, and ethylbenzene. In the present invention, these dispersion media may be used singly or in combination of two or more species.

In the transparent-film-forming composition of the present invention, the ratio of the amount of ingredient A to the amount of ingredient B must be appropriately adjusted in accordance with the refractive index of the transparent substrate to which the transparent-film-forming composition is applied. Generally, the ratio by mass of ingredient A to ingredient B (ingredient A/ingredient B) is preferably 15/85 to 95/5, more preferably 20/80 to 90/10. When the ratio of the amount of ingredient B to the total mass of ingredients A and B is less than 5% the formed film is likely to provide considerable interference-related disturbance, whereas when the ratio of the amount of ingredient B is in excess of 85%, the refractive index of the film cannot be increased to a desired level.

In the transparent-film-forming composition of the present invention, the proportions of respective ingredients must be appropriately adjusted in accordance with the refractive index of the transparent substrate to which the transparent-film-forming composition is applied. Generally, the ratio by mass of binder solid content to the amount of microparticle-form inorganic substance (total amount of ingredient A and ingredient B) is preferably 20/80 to 90/10 more preferably 30/70 to 75/25. When the ratio by mass of binder solid content to the total mass of ingredients A and B and binder solid content is less than 10%, the formed film is likely to have a high refractive index but recued transparency, whereas when the ratio is in excess of 80%, the refractive index of the film cannot be increased to a desired level.

In the transparent-film-forming composition of the present invention, the ratio by mass of dispersion stabilizer to the amount of microparticle-form inorganic substance (total amount of ingredient A and ingredient B) is preferably 99.8/0.2 to 66.7/33.3, more preferably 99.0/1.0 to 76.9/23.1. When the ratio of the amount of dispersion stabilizer to the total amount of microparticle-form inorganic substance and dispersion stabilizer is less than 0.2%, the storage stability of the composition cannot be improved sufficiently, whereas when the ratio is in excess of 33.3%, the dispersion stabilizer is likely to be not dissolved but precipitated.

The transparent-film-forming composition of the present invention may be produced through adding, simultaneously or in an arbitrary sequence, the ingredient A, the ingredient B, and the binder, and sufficiently mixing the resultant mixture. In this case, a dispersion medium may be appropriately added in accordance with need. Alternatively, the transparent-film-forming composition may be produced through separately preparing a composition containing the ingredient A and a binder (ingredient A-containing composition) and a composition containing the ingredient B and a binder (ingredient B-containing composition) and mixing the ingredient A-containing composition with the ingredient B-containing composition. Also in this case, a dispersion medium may be appropriately added in accordance with need.
In a typical procedure, the ingredients A and B are dispersed in a dispersion medium, to thereby form a dispersion, and a binder is added to the dispersion, whereby a transparent-film-forming composition is produced. Before performing a dispersing process, a preliminary dispersing process is preferably performed. In the preliminary dispersing process ingredients A and B are gradually added to a dispersion medium with stirring by means of a disper or a similar apparatus, and the mixture is sufficiently stirred until disappearance of mass of the ingredients A and B is visually confirmed. In the case where a dispersion stabilizer is added, the ingredient A, the ingredient B, and the binder are preferably added, simultaneously or in an arbitrary sequence, to a dispersion medium in which the dispersion stabilizer has been dissolved.

The dispersion process of the ingredients A and B may be performed by means of, for example, a paint shaker, a ball mill, a sand mill, or a centri-mill. During the dispersing process, beads for dispersion such as glass beads and zirconia beads are preferably used. No particular limitation is imposed on the bead size, and the size is generally about 0.05 to about 1 mm, preferably about 0.08 to about 0.65 mm.

In the transparent-film-forming composition of the present invention, the mean particle size of inorganic microparticles serving as ingredients A and B is preferably 120 nm or less, more preferably 80 nm or less. When the mean particle size is in excess of 120 nm, the haze (JIS K7105) of the formed film tends to increase.

The transparent-film-forming composition of the present invention may be incorporated into a composition for forming protective film, a composition for forming anti-reflection film, an adhesive, a sealing material, a binder, etc. Particularly preferably, the composition is employed in a composition for forming an anti-reflection film.

So long as the objects of the invention are not impeded, the transparent-film-forming composition of the present invention may further contain ordinary additives other than the aforementioned additives. Examples of such additives include a polymerization inhibitor, a hardening catalyst, an anti-oxidant, a leveling agent, and a coupling agent.

The transparent-film-forming composition of the present invention can provide a film through applying or printing the composition onto a substrate and hardening the composition. Examples of the material of the substrate include polycarbonate, poly(methyl methacrylate), polystyrene, polyester, polyolefin, epoxy resin, melamine resin, triacetyl cellulose resin, poly(ethylene terephthalate), poly(ethylene naphthalate), ABS resin, norbornene resin, and glass. For example, the composition of the present invention may be suitably used for forming an anti-reflection film of plastic optical parts, touch panels, film-type liquid crystal displays, plastic optical parts, etc.

The transparent-film-layered product of the present invention includes a transparent substrate and, on a surface of the aforementioned transparent substrate a transparent film formed from the aforementioned transparent-film-forming composition. The transparent substrate and transparent-film-forming composition are selected such that the formed film has a difference in refractive index between the transparent substrate and the transparent film of preferably 0.03 or smaller, more preferably 0.02 or smaller. When the formed transparent film has a difference in refractive index between the transparent substrate and the transparent film in excess of 0.03, considerable interference-related disturbance is likely to be provided.

Application (coating or printing) of the transparent-film-forming composition of the present invention onto the transparent substrate may be performed through a routine method such as bar coating, gravure coating, roll coating, spin coating, screen printing, ink-jet coating, air-spraying, airless-spraying, and electrostatic coating.

When the composition contains a thermosetting resin as a binder, the film may be formed through a method such as baking. The baking temperature is preferably lower than the glass transition temperature of the transparent substrate.

When the composition contains an actinic-radiation-curable compound as a binder, if required, the applied composition is heated to evaporate the dispersion medium, and the coating film is dried. Subsequently, the coating film is irradiated with actinic radiation (UV ray or electron beam). Examples of the source of actinic radiation which may be employed in the invention include UV sources such as a low-pressure mercury lamp, a high-pressure mercury lamp, a metal halide lamp, a xenon lamp, an excimer laser, and a dye layer and an electron beam accelerator. The dose of actinic radiation is preferably 50 to 3,000 mJ/cm² in the case of a UV ray, and 0.2 to 1,000 µC/cm² in the case of electron beam. By the action of actinic radiation, the aforementioned actinic-radiation-curable compound is polymerized, to thereby form a film in which the ingredients A and B are bound by the mediation of the binder.

The transparent film formed through curing transparent-film-forming composition of the present invention preferably has a thickness of 0.1 to 10.0 µm, more preferably 0.3 to 5.0 µm. In the transparent film formed through curing transparent-film-forming composition of the present invention, the ingredients A and B and the binder are uniformly dispersed in the film. Thus, the film is free from interference-related disturbance and exhibits high transparency and low haze. The film preferably has a difference in refractive index between the transparent substrate and the transparent film of 0.03 or smaller, more preferably 0.02 or smaller. Furthermore, the film preferably has a light transmittance of 80% or higher, more preferably 85% or higher, and preferably has a haze of 1.5% or lower, more preferably 1.0% or lower.

### Examples

The present invention will next be described in more detail by way of Examples and Comparative Examples. Unless otherwise specified, in the Examples and Comparative Examples, the unit "part(s) refers to "part(s) by mass."
The following ingredients were employed in the Examples and the Comparative Examples.

### <Ingredient A>

Zirconium oxide (ZrO₂) (refractive index: 2.2, primary particle size: 20 nm)
Titanium oxide (TiO₂) (refractive index: 2.76, primary particle size: 20 nm)
ATO (refractive index: 2,0, primary particle size: 30 nm)
Zinc oxide (ZnO) (refractive index: 2,03, primary particle size: 30 nm)

### <Ingredient B>

Aluminum oxide (Al₂O₃) (refractive index: 1.76, primary particle size: 20 nm)
Magnesium oxide (MgO) (refractive index: 1.72, primary particle size: 30 nm)
Aluminum hydroxide (Al(OH)₃) (refractive index: 1.58, primary particle size: 30 nm)

### <Binder>

Shiko UV-7600B (refractive index; 1.52, product of The Nippon Synthetic Chemical Industry Co., Ltd.)

### <Photopolymerization initiator>

IRGACURE 184 (product of Ciba Specialty Chemicals)

### <Dispersion medium>

BYK-142 (NV. ≥60%) (product of Byk Chemie Japan K.K.)

### <Dispersion stabilizer>

Acetylacetonate (C₅H₇O₂)
Ethylenediamine (C₂H₈N₂)
Triethylenetetramine (C₆H₁₈N₄)
Pivaloyltrifluoroacetone
Zirconium acetylacetonate ([Zr(C₅H₇O2)₄])
Titanium acetylacetonate ([Ti(C₅H₇O₂)₄])
Aluminum acetylacetonate ([Al(C₅H₇O₂)₃])
Zinc acetylacetonate ([Zn(C₅H₇O₂)₂])
Dibutyltin bisacetylacetonate ([(C₄H₉)₂Sn((C₅H₇O₂)₂])

### Example 1

Titanium oxide (100 parts), magnesium oxide (116.5 parts), aluminum hydroxide (116.5 parts), BYK-142 (33.3 parts), 2-butanol (500 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (143 parts), IRGACURE 184 (7.2 parts), and 2-butanol (700 parts) were added, to thereby prepare a photo-hardenable composition. The photo-hardenable composition was applied to a polyethylene terephthalate (PET) film having a thickness of 75 µm (light transmittance: 91%, haze: 0.5%, refractive index: 1.65) by means of a roller-coater, and the organic solvent was evaporated. Subsequently, the coating was irradiated in air with light from a high-pressure mercury lamp at a dose of 300 mJ/cm², to thereby form a transparent-film-layered product including a film having a thickness of 3 µm.

### Example 2

Zirconium oxide (50 parts), ATO (50 parts), aluminum oxide (25 parts), BYK-142 (12.5 parts), 2-butanol (300 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (59 parts), IRGACURE 184 (3 parts), and 2-butanol (150 parts) were added, to thereby prepare a photo-hardenable composition. Thereafter, in a manner similar to that of Example 1, a transparent-film-layered product including a film having a thickness of 3 µm was formed.

### Example 3

Titanium oxide (50 parts), zirconium oxide (50 parts), aluminum oxide (43 parts), BYK-142 (14.3 parts), 2-butanol (400 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (67 parts), IRGACURE 184 (3.4 parts), and 2-butanol (120 parts) were added, to thereby prepare a photo-hardenable composition. The photo-hardenable composition was applied to a polyethylene naphthalate (PEN) film having a thickness of 75 µm (light transmittance: 87%, haze: 0.4%, refractive index: 1.76) by means of a roller-coater, and the organic solvent was evaporated. Subsequently, the coating was irradiated in air with light from a high-pressure mercury lamp at a dose of 300 mJ/cm², to thereby form a transparent-film-layered product including a film having a thickness of 3 µm.

### Example 4

Zinc oxide (100 parts), aluminum oxide (400 parts), BYK-142 (50.0 parts), 2-butanol (1,200 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (377 parts), IRGACURE 184 (19 parts), and 2-butanol (960 parts) were added, to thereby prepare a photo-hardenable composition. The photo-hardenable composition was applied to a polycarbonate (PC) film having a thickness of 75 µm (light transmittance: 88%, haze: 0.6%, refractive index: 1.59) by means of a roller-coater, and the organic solvent was evaporated. Subsequently, the coating was irradiated in air with light from a high-pressure mercury lamp at a dose of 300 mJ/cm², to thereby form a transparent-film-layered product including a film having a thickness of 3 µm.

### Example 5

Zirconium oxide (100 parts), aluminum oxide (43 parts), BYK-142 (14.3 parts), 2-butanol (400 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (61 parts), IRGACURE 184 (3.2 parts), and 2-butanol (80 parts) were added, to thereby prepare a photo-hardenable composition. Thereafter, in a manner similar to that of Example 1, a transparent-film-layered product including a film having a thickness of 3 µm was formed.

### Example 6

Titanium oxide (50 parts), zirconium oxide (50 parts), aluminum oxide (43 parts), BYK-142 (14.3 parts), acetylacetone (16 parts), 2-butanol (400 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (67 parts), IRGACURE 184 (3.4 parts), and 2-butanol (120 parts) were added, to thereby prepare a photo-hardenable composition. The photo-hardenable composition was applied to a polyethylene naphthalate (PEN) film having a thickness of 75 µm (light transmittance: 87%, haze: 0.4%, refractive index: 1.76) by means of a roller-coater, and the organic solvent was evaporated. Subsequently, the coating was irradiated in air with light from a high-pressure mercury lamp at a dose of 300 mJ/cm², to thereby form a transparent-film-layered product including a film having a thickness of 3 µm.

### Example 7

The procedure of Example 6 was repeated, except that aluminum acetylacetonate (61 parts) was used instead of acetylacetone (16 parts), to thereby prepare a photo-hardenable composition. Thereafter, in a manner similar to that of Example 6, a transparent-film-layered product including a film having a thickness of 3 µm was formed.

### Example 8

The procedure of Example 6 was repeated, except that titanium acetylacetonate (61 parts) was used instead of acetylacetone (16 parts), to thereby prepare a photo-hardenable composition. Thereafter, in a manner similar to that of Example 6, a transparent-film-layered product including a film having a thickness of 3 µm was formed.

### Example 9

Zirconium oxide (50 parts), ATO (50 parts), aluminum oxide (25 parts), BYK-142 (12.5 parts), ethylenediamine (7 parts), dibutyltin bisacetylacetonate (7 parts), 2-butanol (300 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (59 parts), IRGACURE 184 (3 parts), and 2-butanol (150 parts) were added, to thereby prepare a photo-hardenable composition. Thereafter, in a manner similar to that of Example 1, a transparent-film-layered product including a film having a thickness of 3 µm was formed.

### Example 10

Zirconium oxide (100 parts), aluminum oxide (43 parts). BYK-142 (14.3 parts), triethylenetetramine (16 parts), 2-butanol (400 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (61 parts), IRGACURE 184 (3.2 parts), and 2-butanol (80 parts) were added, to thereby prepare a photo-hardenable composition. Thereafter, in a manner similar to that of Example 1, a transparent-film-layered product including a film having a thickness of 3 µm was formed.

### Example 11

The procedure of Example 10 was repeated, except that zirconium acetylacetonate (16 parts) was used instead of triethylenetetramine (16 parts), to thereby prepare a photo-hardenable composition. Thereafter, in a manner similar to that of Example 1, a transparent-film-layered product including a film having a thickness of 3 µm was formed.

### Example 12

Zinc oxide (100 parts), aluminum oxide (400 parts), BYK-142 (50.0 parts), pivaloylfluoroacetone (65 parts), zinc acetylacetonate (60 parts), (2-butanol (1,200 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (377 parts), IRGACURE 184 (19 parts), and 2-butanol (960 parts) were added, to thereby prepare a photo-hardenable composition. The photo-hardenable composition was applied to a polycarbonate (PC) film having a thickness of 75 µm (light transmittance: 88%, haze: 0.6%, refractive index: 1.59) by means of a roller-coater, and the organic solvent was evaporated. Subsequently, the coating was irradiated in air with light from a high-pressure mercury lamp at a dose of 300 mJ/cm², to thereby form a transparent-film-layered product including a film having a thickness of 3 µm.

### Comparative Example 1

Zirconium oxide (100 parts), BYK-142 (14.3 parts). 2-butanol (500 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (89 parts), IRGACURE 184 (4.3 parts), and 2-butanol (130 parts) were added, to thereby prepare a photo-hardenable composition. Thereafter, in a manner similar to that of Example 1, a transparent-film-layered product including a film having a thickness of 3 µm was formed.

### Comparative Example 2

Aluminum oxide (100 parts), BYK-142 (14.3 parts) 2-butanol (500 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (18 parts), IRGACURE 184 (4.3 parts), and 2-butanol (130 parts) were added, to thereby prepare a photo-hardenable composition. Thereafter, in a manner similar to that of Example 1, a transparent-film-layered product including a film having a thickness of 3 µm was formed.

### Comparative Example 3

Zirconium oxide (100 parts), aluminum oxide (43 parts), BYK-142 (14.3 parts), 2-butanol (400 parts), and glass beads (800 parts) were all placed in a vessel, and the mixture was kneaded by means of a paint shaker for 7 hours. After kneading, the glass beads were removed from the resultant mixture, to thereby recover a dispersion. To the dispersion, UV-7600B (53 parts), IRGACURE 184 (2.7 parts), and 2-butanol (80 parts) were added, to thereby prepare a photo-hardenable composition. Thereafter, in a manner similar to that of Example 1, a transparent-film-layered product including a film having a thickness of 3 µm was formed.

### <Method of evaluation>

### (1) Mean particle size of film-forming composition (median diameter)

Apparatus: Microtrac particle size distribution meter (product of Nikkiso Co., Ltd,)
Measurement conditions: temperature of 20°C
Sample: Each sample was diluted with a dispersion medium to NV. 5% before measurement.
Data analysis conditions: particle size based, volume based Refractive index of 2-butanol as a dispersion medium: 1.40

### (2) Refractive index of transparent film

The refractive index of each of the transparent films produced in the Examples 1 to 12 and Comparative Examples 1 to 3 (not including the corresponding transparent substrate) was determined at 20°C by means of an Abbe refractometer DR-M4 (product of Aatago Co., Ltd.).

### (3) Transmittance and haze of transparent-film-layered product

The transmittance and haze of each of the transparent-film-layered product obtained in the Examples 1 to 12 and Comparative Examples 1 to 3 were determined by means of TC-HIII DPK (product of Tokyo Denshoku Co., Ltd.). The values were obtained from the transparent-film-layered product (including the corresponding transparent film),

### (4) Interference-related disturbance of transparent-film-layered product

Each of the transparent-film-layered product obtained in the Examples 1 to 12 and Comparative Examples 1 to 3 was placed under a three-band fluorescent lamp, and the interference of the film-layered product was visually observed. The interference-related disturbance was evaluated on the basis of the following ratings:
○: Minimized interference-related disturbance
△: Slight interference-related disturbance, but employable
X: Considerable interference-related disturbance
-: Not evaluated due to excessively high haze
The results of the above measurements and the evaluation results, together with the compositional proportions of the compositions, are shown in Tables 1 and 2

[Table 1]

**Table 1**

| | | Ex. 1 | Ex 2 | Ex. 3 | Ex. 4 | Ex 5 | Comp. Ex.1 | Comp. Ex. 2 | Comp. Ex. 3 |
|---|---|---|---|---|---|---|---|---|---|
| Ingredient A | | TiO₂ | ZrO₂ ATO | TiO₂ ZrO₂ | ZnO | ZrO₂ | ZrO₂ | - | ZrO₂ |
| Ingredient B | | MgO Al(OH)₃ | Al₂O₃ | Al₂O₃ | Al₂O₃ | Al₂O₃ | - | Al₂O₃ | Al₂O₃ |
| Ingredient A/ingredient B | | 30/70 | 80/20 | 70/30 | 20/80 | 70/30 | - | - | 70/30 |
| A+B/binder | | 70/30 | 68/32 | 68/32 | 57/43 | 70/30 | 53/47 | 85/15 | 73/27 |
| Transparent substrate (Refractive index of material) | | PET | PET | PEN | PC | PET | PET | PET | PET |
| | | (1.65) | (1.65) | (1.76) | (1.59) | (1.65) | (1.65) | (1.65) | (1.65) |
| Median diameter (nm) | 0 | 0 | 60 | 40 | 40 | 50 | 40 | 40 | 50 |
| | 3 months | 60 | 50 | 60 | 70 | 50 | 50 | 60 | 80 |
| | 6 month | 110 | 110 | 100 | 130 | 90 | 100 | 100 | 110 |
| | 1 year | 200 | 190 | 160 | 210 | 140 | 150 | 150 | 170 |
| Refractive index of transparent film | | 1.66 | 1.64 | 1.75 | 1.60 | 1.68 | 1.65 | 1.59 | 1.69 |
| Transmittance of transparent-film-layered product (%) | | 86 | 86 | 86 | 88 | 89 | 89 | 87 | 89 |
| Haze of transparent-film-layered product (%) | | 0.8 | 1.1 | 0.9 | 0.9 | 0.7 | 0.5 | 15 | 0.7 ' |
| Interference-related disturbance of transparent-film-layered product | | ○ | ○ | ○ | ○ | △ | X | - | X |

[Table 2]

**Table 2**

| | | Ex. 6 | Ex. 7 | Ex. 8 | Ex. 9 | Ex. 10 | Ex. 11 | Ex. 12 |
|---|---|---|---|---|---|---|---|---|
| Ingredient A | | TiO₂ | TiO₂ | TiO₂ | ZrO₂ | ZrO₂ | ZrO₂ | ZnO |
| | | ZrO₂ | ZrO₂ | ZrO₂ | ATO | | | |
| Ingredient B | | Al₂O₃ | Al₂O₃ | Al₂O₃ | Al₂O₃ | Al₂O₃ | Al₂O₃ | Al₂O₃ |
| Dispersion stabilizer | | acac | Al acac | Ti acac | ethylene-diamine, Bu₂Sn(acac)₂ | triethylene-tetramine | Zr acac | pivaloyl-trifluoro-acetylacetone, Zn acac |
| Ingredient A/ingredient B | | 70/30 | 70/30 | 70/30 | 80/20 | 70/30 | 70/30 | 20/80 |
| A+B/Binder | | 68/32 | 68/32 | 68/32 | 68/32 | 70/30 | 70/30 | 57/43 |
| A+B/Dispersion stabilizer | | 90/10 | 70/30 | 70/30 | 90/10 | 90/10 | 90/10 | 80/20 |
| Transparent substrate (Refractive index of material) | | PEN (1.76) | PEN (1.76) | PEN (1.76) | PET (1.65) | PET (1.65) | PET (1.65) | PC (1.59) |
| Median diameter (nm) | 0 | 70 | 60 | 60 | 50 | 60 | 40 | 40 |
| | 3 months | 60 | 50 | 50 | 50 | 60 | 40 | 60 |
| | 6 month | 80 | 60 | 60 | 60 | 70 | 40 | 50 |
| | 1 year | 80 | 70 | 60 | 50 | 80 | 40 | 60 |
| Refractive index of transparent film index of transparent | | 1.75 | 1.75 | 1.75 | 1.68 | 1.68 | 1.68 | 1.60 |
| Transmittance of transparent-film-layered product (%) | | 86 | 86 | 86 | 89 | 89 | 89 | 88 |
| Haze of transparent-film-layered product (%) | | 0.7 | 0.8 | 0.8 | 0.8 | 1.0 | 0.7 | 1.0 |
| Interference-related disturbance of transparent-film-layered product | | ○ | ○ | ○ | △ | △ | △ | ○ |

As is clear from Tables 1 and 2, in Examples 1 to 4, 6, 7, 8, and 12, each of the compositions contained both ingredients A and B and each of the formed transparent films exhibited a difference in refractive index between the transparent substrate and the film of 0.02 or less. In these cases, transparent films providing minimized interference-related disturbance and having a transmittance of 86% or higher and a haze of 1.1% or less were obtained. In the cases where each of the formed transparent films exhibited a difference in refractive index between the transparent substrate and the film of 0.03 (Examples 5, 9, 10, and 11), slight interference-related disturbance was observed. However, such interference-related disturbance did not impede practical use of the transparent-film-layered products. In the cases where a dispersion stabilizer was employed (Examples 6 to 12), the particle sizes of the film-forming composition were constant for one year, and the storage stability of the compositions were higher than those of the compositions containing no dispersion stabilizer. In the case where no ingredient B was added (Comparative Example 1), interference-related disturbance was observed. When no ingredient A was added (Comparative Example 2), the produced transparent film failed to exhibit a difference in refractive index between the transparent substrate and the film of 0.03 or less. In the case where the formed transparent film exhibited a difference in refractive index between the transparent substrate and the film higher than 0.03 (Comparative Example 3), considerable interference-related disturbance was observed, even though the film-forming composition contained ingredients A and B.

## Claims

1. A transparent-film-forming composition **characterized by** comprising at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), and a binder having a refractive index lower than that of the ingredient B.

2. A transparent-film-forming composition **characterized by** comprising at least one microparticle-form inorganic substance having a refractive index of 1.80 or higher and lower than 3.00 (ingredient A), at least one microparticle-form inorganic substance having a refractive index of 1.55 or higher and lower than 1.80 (ingredient B), a binder having a refractive index lower than that of the ingredient B, and a dispersion stabilizer.

3. A transparent-film-forming composition according to claim 2, wherein the dispersion stabilizer comprises at least one species selected from the group consisting of a chelating agent and a metal complex.

4. A transparent-film-forming composition according to claim 3, wherein the chelating agent comprises at least one species selected from the group consisting of polyamines, β-diketones, polyaminocarboxylic acids, oxycarboxylic acids, oximes, oxine, and oxalic acid.

5. A transparent-film-forming composition according to claim 3, wherein the metal complex is formed of a metal selected from the group consisting of zirconium, titanium, aluminum, zinc, indium, and tin, and a ligand selected from the group consisting of polyamines, β-diketones, polyaminocarboxylic acids, oxycarboxylic acids, oximes, oxine, and oxalic acid.

6. A transparent-film-forming composition according to any one of claims 1 to 5, wherein the ingredient A comprises at least one species selected from the group consisting of titanium oxide, cerium oxide, zirconium oxide, antimony-doped tin oxide (ATO), tin-doped indium oxide (ITO), aluminum-doped zinc oxide (AZO), tin oxide, and zinc oxide.

7. A transparent-film-forming composition according to any one of claims 1 to 6, wherein the ingredient B comprises at least one species selected from the group consisting of aluminum oxide, magnesium oxide, aluminum hydroxide, calcium carbonate, and barium sulfate.

8. A transparent-film-forming composition according to any one of claims 1 to 7, wherein the binder has a refractive index lower than 1.55.

9. A transparent-film-layered product **characterized by** comprising a transparent substrate and, on a surface of the substrate, a transparent film formed from a transparent-film-forming composition as recited in any one of claims 1 to 7, which layered product exhibits a difference in refractive index between the transparent substrate and the transparent film of 0.03 or smaller.

10. A transparent-film-layered product according to claim 9, which has a light transmittance of 80% or higher and a haze of 1.5% or lower.
